# EUROPEAN PATENT SPECIFICATION

(11) **EP 4 587 319 B1**
(45) Date of publication and mention of the grant of the patent: **15.04.2026**
(21) Application number: 23769331.2
(22) Date of filing: 12.09.2023
(51) Int. Cl.: B62J 9/23, E05D 5/12

(54) **CASE FOR CYCLE AND MOTORCYCLE COMPRISING A SECURE HINGE**
GEHÄUSE FÜR FAHRRAD UND MOTORRAD MIT EINEM SICHEREN SCHARNIER
CAISSON POUR CYCLE ET MOTOCYCLETTE COMPRENANT UNE CHARNIÈRE SÉCURISÉE

(30) Priority: 13.09.2022 IT 202200018660
(43) Date of publication of application: 23.07.2025
(73) Proprietor: Givi S.p.A., 25020 Flero (BS) (IT)
(72) Inventor: VISENZI, Giuseppe, 25100 Brescia (BS) (IT)
(74) Representative: Biallo, Dario
(86) International application number: PCT/IB2023/059037
(87) International publication number: WO 2024/057205

(56) References cited:
- CN-A- 114 179 945
- CN-U- 213 473 380
- CN-U- 216 636 700
- US-A1- 2019 351 836

## Description

The present invention relates to a case for cycle and motorcycle comprising a secure hinge. CN 216 636 700 U discloses the preamble of claim 1.

A case comprising a lid hinged in the rear zone of the case and with lock in the front zone so as to allow the case to be easily opened is known in the state of the art. An important factor in rear hinges is the force required for opening. The hinges can be totally free, where a low rotation friction allows an easy opening but the lid can be only open or closed, while in an intermediate opening position at any tilting angle with respect to the bottom the weight of the lid will make it fall down. Alternatively, the hinges can be with high friction, with a force to be employed for opening the lid at the maximum possible angle with respect to the bottom, but with the possibility of maintaining the lid in intermediate opening positions at a freely selectable tilting angle with respect to the bottom. The disadvantage for this second solution is to fail to maintain a constant friction over time, since during the use a consumption of the friction surfaces occurs, varying the mechanical features thereof. A solution of the state of the known art is to insert screw adjustments in the pins, but this causes some difficulties: the case can be easily opened unscrewing and removing the pins from the sectioned hollow cylinders of the hinge cancelling the security of the case. Another disadvantage is that the threaded pin tends to rotate together with the hinge and the nut is unscrewed making the hardness adjustment for opening the lid with respect to the bottom ineffective.

An object of the present invention consists in making a case for cycle or motorcycle comprising a secure hinge that allows to overcome the drawback of the prior art, theft-proof and making the hardness adjustment for opening the hinge over time effective, allowing the lid of the case to remain open at any tilting angle with respect to the bottom and to remain in such tilted opening position at a preferred angle.

In accordance with the invention, such object is achieved by a case according to claim 1.

Further features are provided in the dependent claims.

The features and advantages of the present invention will be more apparent from the following exemplary and non-limiting description referred to the attached schematic drawings, in which:
figure 1 is a perspective exploded view of a hinge of a case for cycle or motorcycle according to the present invention;
figure 2 is a perspective view of the hinge of figure 1 mounted;
figure 3 is a side plan view of the hinge of figure 1;
figure 4 is a sectional view of the hinge according to the line IV-IV of figure 3;
figure 5 is a perspective view of the case mounting two hinges of figure 1;
figure 6 shows a lateral plan view of the case mounting two hinges of figure 1 in an open position at an angle freely selectable by the user.

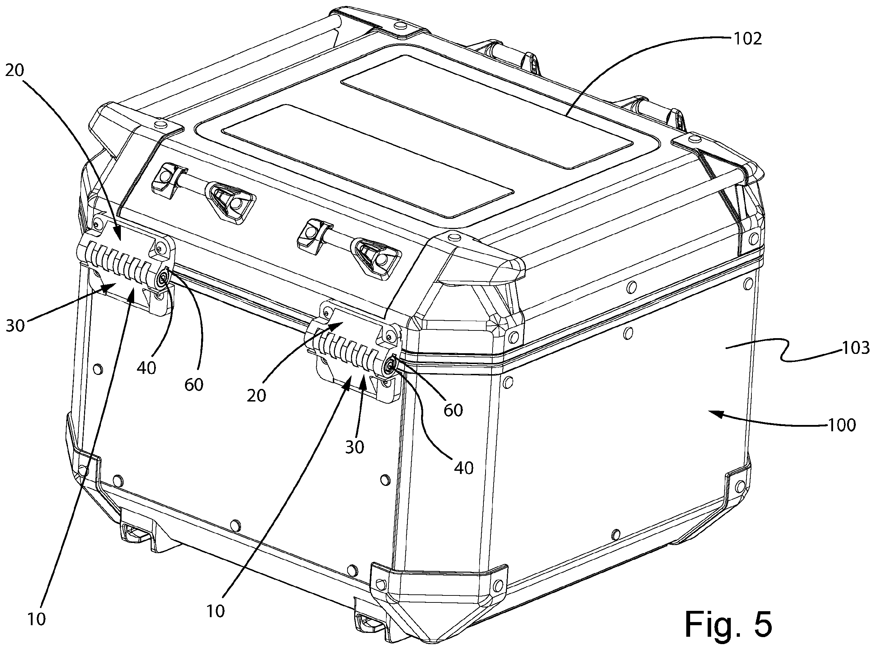

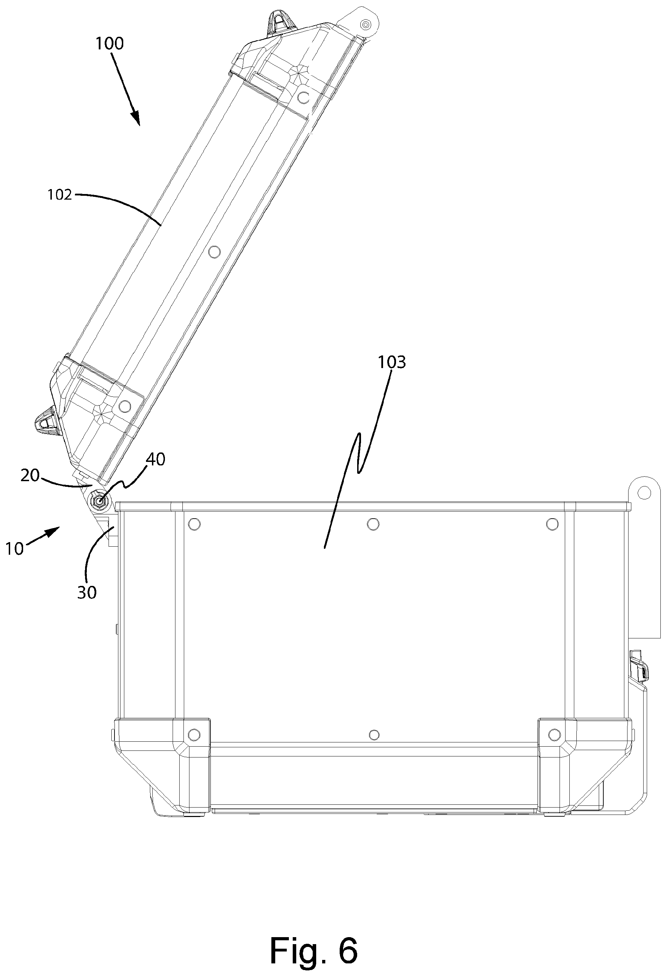

With reference to the cited figures and particularly figures 5 and 6, a case 100 for cycle or motorcycle comprising a lid 102, a bottom 103 and at least one folding hinge 10 is shown.

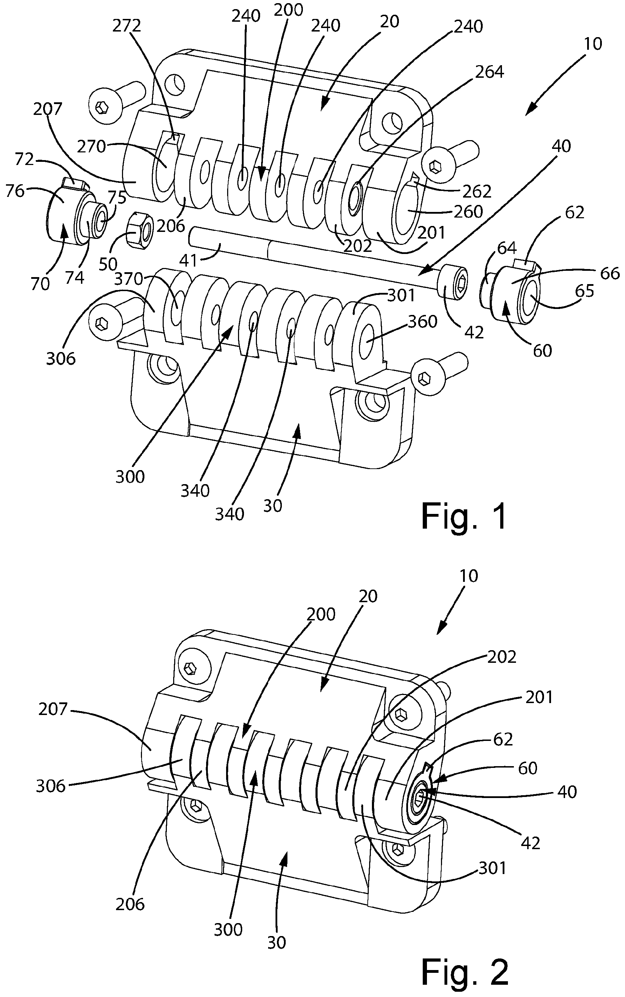

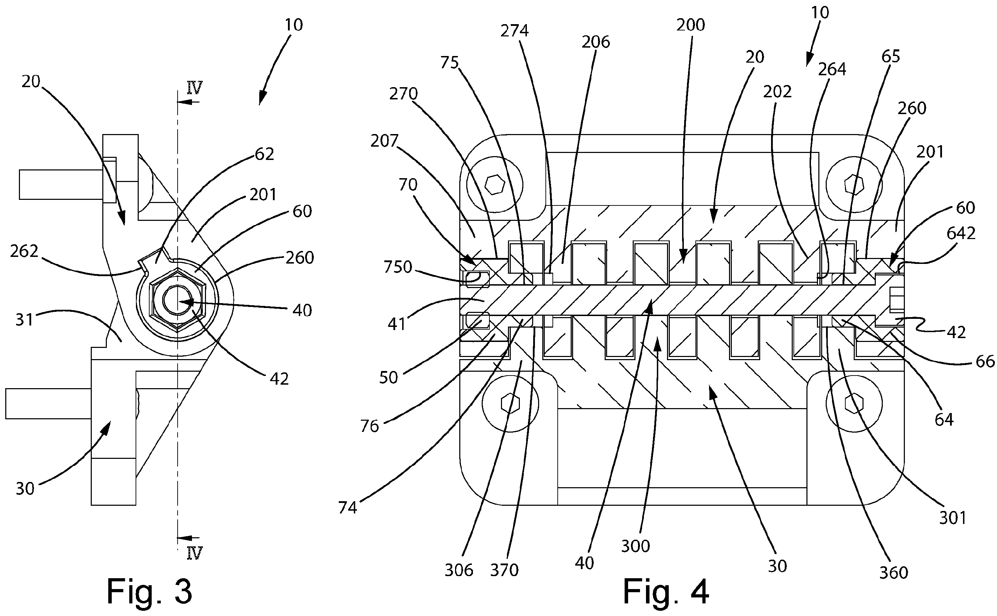

As particularly shown in figures 1-4, said folding hinge 10 comprises an upper portion 20 engaged with the lid 102 and comprising a sectioned upper hollow cylinder 200, a lower portion 30 engaged with the bottom 103 and comprising a sectioned lower hollow cylinder 300.

The hinge 10 comprises a pin 40 pivoted with the sectioned upper hollow cylinder 200 and with the sectioned lower hollow cylinder 300 along a hinging axis.

Said pin 40 comprises a screwing head 42, a shank 43 comprising at least one threaded portion 41.

The hinge 10 comprises a nut 50 screwed with said at least one threaded portion 41 of the shank 43 of the pin 40.

The hinge 10 comprises a first bush 60 comprising a hollow body comprising a through opening 65 disposed along the hinging axis, a matching tooth 62 protruding radially outwards from an external surface of the body of the first bush 60.

The hollow body of the first bush 60 comprises a first portion 64 of smaller diameter and a second portion 66 of larger diameter.

The hinge 10 comprises a second bush 70 comprising a hollow body comprising a through opening 75 disposed along the hinging axis, a matching tooth 72 protruding radially outwards from an external surface of the body of the second bush 70, wherein the hollow body of the second bush 70 comprises a first portion 74 of smaller diameter and a second portion 76 of larger diameter.

Said shank 43 of the pin 40 is mounted through said through opening 65 of the first bush 60 and through said through opening 75 of the second bush 70.

A first section 201 of the sectioned upper hollow cylinder 200 comprises a through opening 260 along the hinging axis. Said through opening 260 is of shape and size suitable for housing the body of the first bush 60. Said through opening 260 comprises a housing portion 262 of complementary shape with respect to the matching tooth 62 of the first bush 60. Said first bush 60 is housed inside said through opening 260 of the first section 201 of the sectioned upper hollow cylinder 200.

Said matching tooth 62 is housed in said housing portion 262 of said through opening 260 of said first section 201 of the sectioned upper hollow cylinder 200.

A last section 207 of the sectioned upper hollow cylinder 200 comprises a through opening 270 along the hinging axis. Said through opening 270 is of shape and size suitable for housing the body of the second bush 70. Said through opening 270 comprises a housing portion 272 of complementary shape with respect to the matching tooth 72 of the second bush 70. Said second bush 70 is housed inside said through opening 270 of the last section 207 of the sectioned upper hollow cylinder 200. Said matching tooth 72 is housed in said housing portion 272 of said through opening 270 of said last section 207 of the sectioned upper hollow cylinder 200.

The pin 40 screwed with the nut 50 allows the hardness adjustment for opening the hinge 10.

Advantageously, the hinge 10 provides that both the first 60 and the second bushes 70 comprise the matching tooth 62 72 which, engaging inside the housing 260, 360, 270 and 370 of the hinge 10, does not allow the rotation between nut 50 and pin 40 and prevents the threaded pin 40 to be loosened maintaining the hardness adjustment to maintain the lid 102 in position at a preferred tilting angle with respect to the bottom 103.

Advantageously, the particular shape of the body of the bush 60, 70 engages both the sectioned hollow cylinders 200, 300 of the hinge 10 and also extracting the pin 40, the hinge 10 cannot be dismounted. The particular construction tolerance between the bushes 60, 70 and hinge 10 creates a forced coupling and makes it easily mountable but almost impossible to extract and dismount, thereby once screwed for the first time the hinge 10 is not dismountable and thus impossible to force and secure against thefts.

Indeed, the two bushes 60, 70 remain forcedly inserted between the sections of the sectioned hollow cylinders 200, 300 and prevent the two portions 20, 30 of the hinge 10 from separating.

Even more advantageously, said through opening 65 of the first bush 60 comprises an end portion 642 of larger diameter and of complementary shape to the screwing head 42 of the pin 40, wherein said screwing head 42 is housed within said end portion 642 of the through opening 65 of the first bush 65.

Advantageously, the housing 642 for the head 42 of the pin 40 allows the pin 40 to be better protected from the outside making the case 100 securer.

Even more advantageously, said matching tooth 62 protrudes radially outwards from an external surface of the second portion 66 of the body of the first bush 60.

Even more advantageously, a first section 301 of the sectioned lower hollow cylinder 300 comprises a through opening 360 along the hinging axis of shape and size suitable for housing at least one portion of the body of the first bush 60.

Advantageously, the housing 360 allows the first bush 60 to remain in position even when the pin 40 is pulled out managing to be an antitheft device.

Even more advantageously, said through opening 360 of the first section 301 of the sectioned lower hollow cylinder 300 has shape and size suitable for housing at least one portion of the first portion 64 of the first bush 60 making the invention even securer.

Even more advantageously, said through opening 75 of the second bush 70 comprises an end portion 750 of larger diameter and complementary shape to the nut 50, wherein said nut 50 is housed within said end portion 750 of the through opening 75 of the second bush 75.

Advantageously, the housing 750 for the nut 50 allows the nut 50 and the pin 40 to be better protected from the outside making the case 100 securer.

Even more advantageously, it is specified that said matching tooth 72 of the second bush 70 protrudes radially outwards from an external surface of the second portion 76 of the body of the second bush 70.

Even more advantageously, that a last section 306 of the sectioned lower hollow cylinder 300 comprises a through opening 370 along the hinging axis of shape and size suitable for housing at least one portion of the body of the second bush 70.

Advantageously, the housing 370 allows the second bush 70 to remain in position even when the pin 40 is pulled out managing to be an antitheft device.

Even more advantageously, said through opening 370 of the last section 306 of the sectioned lower hollow cylinder 300 has shape and size suitable for housing at least one portion of the first portion 74 of the second bush 70 making the invention even securer.

Even more advantageously, a second section 202 of the sectioned upper hollow cylinder 200 comprises a through opening 264 along the hinging axis of shape and size suitable for housing at least one portion of the first portion 64 of the first bush 60.

Even more advantageously, a penultimate section 206 of the sectioned upper hollow cylinder 200 comprises a through opening 274 along the hinging axis of shape and size suitable for housing at least one portion of the first portion 74 of the second bush 70.

Advantageously, the case 100 for cycle or motorcycle of the present invention comprises a secure hinge 10 which allows to overcome the drawbacks of the prior art, is theft-proof and makes the hardness adjustment for opening the hinge over time effective, allowing the lid 102 of the case 100 to remain open at any tilting angle with respect to the bottom 103 and to remain in such tilted opening position at a user-preferred angle.

Alternatively, said matching tooth 62 of the first bush 60 can be provided protruding radially outwards from an external surface of the first portion 64 of the body of the first bush 60.

Alternatively, said matching tooth 72 of the second bush 70 can be provided protruding radially outwards from an external surface of the first portion 74 of the body of the second bush 70.

In the two previous alternatives, the housings 262 and 272 are provided to be suitably positioned for housing said two matching teeth 62, 72, respectively.

The invention thus conceived is susceptible of a number of modifications and variations and the scope of the present invention is defined by the appended claims. In practice, the used materials, as well as the size, can be any depending on the technical requirements.

## Claims

1. Case (100) for a cycle or motorcycle comprising a lid (102), a bottom (103) and at least one folding hinge (10),
wherein said folding hinge (10) comprises
an upper portion (20) engaged with the lid (102) and comprising a sectioned upper hollow cylinder (200),
a lower portion (30) engaged with the bottom (103) and comprising a sectioned lower hollow cylinder (300),
a pin (40) pivoted with the sectioned upper hollow cylinder (200) and with the sectioned lower hollow cylinder (300) along a hinging axis, **characterized in that** said pin (40) comprises a screwing head (42), a shank (43) comprising at least one threaded portion (41),
a nut (50) screwed with said at least one threaded portion (41) of the shank (43) of the pin (40),
a first bush (60) comprising a hollow body comprising a through opening (65) disposed along the hinging axis, a matching tooth (62) protruding radially outwards from an external surface of the body of the first bush (60), wherein the hollow body of the first bush (60) comprises a first portion (64) of smaller diameter and a second portion (66) of larger diameter,
a second bush (70) comprising a hollow body comprising a through opening (75) disposed along the hinging axis, a matching tooth (72) protruding radially outwards from an external surface of the body of the second bush (70), wherein the hollow body of the second bush (70) comprises a first portion (74) of smaller diameter and a second portion (76) of larger diameter,
wherein said shank (43) of the pin (40) is mounted through said through opening (65) of the first bush (60) and through said through opening (75) of the second bush (70),
wherein a first section (201) of the sectioned upper hollow cylinder (200) comprises a through opening (260) along the hinging axis, wherein said through opening (260) is of shape and size suitable for housing the body of the first bush (60), wherein said through opening (260) comprises a housing portion (262) of complementary shape with respect to the matching tooth (62) of the first bush (60), wherein said first bush (60) is housed inside said through opening (260) of the first section (201) of the sectioned upper hollow cylinder (200), wherein said matching tooth (62) is housed in said housing portion (262) of said through opening (260) of said first section (201) of the sectioned upper hollow cylinder (200),
wherein a last section (207) of the sectioned upper hollow cylinder (200) comprises a through opening (270) along the hinging axis, wherein said through opening (270) is of shape and size suitable for housing the body of the second bush (70), wherein said through opening (270) comprises a housing portion (272) of complementary shape with respect to the matching tooth (72) of the second bush (70), wherein said second bush (70) is housed inside said through opening (270) of the last section (207) of the sectioned upper hollow cylinder (200), wherein said matching tooth (72) is housed in said housing portion (272) of said through opening (270) of said last section (207) of the sectioned upper hollow cylinder (200).

2. Case (100) according to claim 1, **characterized in that** said through opening (65) of the first bush (60) comprises an end portion (642) of larger diameter and complementary shape to the screwing head (42) of the pin (40), wherein said screwing head (42) is housed within said end portion (642) of the through opening (65) of the first bush (65).

3. Case (100) according to any one of claims 1 or 2, **characterized in that** said matching tooth (62) protrudes radially outwards from an external surface of the second portion (66) of the body of the first bush (60).

4. Case (100) according to any one of claims 1-3, **characterized in that** a first section (301) of the sectioned lower hollow cylinder (300) comprises a through opening (360) along the hinging axis of shape and size suitable for housing at least one portion of the body of the first bush (60).

5. Case (100) according to claim 4, **characterized in that** said through opening (360) of the first section (301) of the sectioned lower hollow cylinder (300) has shape and size suitable for housing at least one portion of the first portion (64) of the first bush (60).

6. Case (100) according to any one of claims 1-5, **characterized in that** said through opening (75) of the second bush (70) comprises an end portion (750) having larger diameter and complementary shape to the nut (50), wherein said nut (50) is housed within said end portion (750) of the through opening (75) of the second bush (75).

7. Case (100) according to any one of claims 1-6, **characterized in that** said matching tooth (72) of the second bush (70) protrudes radially outwards from an external surface of the second portion (76) of the body of the second bush (70).

8. Case (100) according to any one of claims 1-7, **characterized in that** a last section (306) of the sectioned lower hollow cylinder (300) comprises a through opening (370) along the hinging axis of shape and size suitable for housing at least one portion of the body of the second bush (70).

9. Case (100) according to claim 8, **characterized in that** said through opening (370) of the last section (306) of the sectioned lower hollow cylinder (300) has shape and size suitable for housing at least one portion of the first portion (74) of the second bush (70).

10. Case (100) according to any one of claims 1-9, **characterized in that** a second section (202) of the sectioned upper hollow cylinder (200) comprises a through opening (264) along the hinging axis of shape and size suitable for housing at least one portion of the first portion (64) of the first bush (60) and
that a penultimate section (206) of the sectioned upper hollow cylinder (200) comprises a through opening (274) along the hinging axis of shape and size suitable for housing at least one portion of the first portion (74) of the second bush (70).

## Patentansprüche

1. Gehäuse (100) für ein Fahrrad oder Motorrad mit einem Deckel (102), einem Boden (103) und mindestens einem Klappscharnier (10),
wobei das Klappscharnier (10) Folgendes umfasst
einen oberen Teil (20), der mit dem Deckel (102) in Eingriff steht und einen unterteilten oberen Hohlzylinder (200) umfasst,
einen unteren Teil (30), der mit dem Boden (103) in Eingriff steht und einen geteilten unteren Hohlzylinder (300) umfasst,
einen Stift (40), der mit dem unterteilten oberen Hohlzylinder (200) und mit dem unterteilten unteren Hohlzylinder (300) entlang einer Gelenkachse schwenkbar verbunden ist, **dadurch gekennzeichnet, dass** der Stift (40) einen Schraubenkopf (42) und einen Schaft (43) mit mindestens einem Gewindeabschnitt (41) aufweist,
eine Mutter (50), die mit dem mindestens einen Gewindeabschnitt (41) des Schafts (43) des Stifts (40) verschraubt ist,
eine erste Buchse (60) mit einem Hohlkörper, der eine entlang der Gelenkachse angeordnete Durchgangsöffnung (65) aufweist, wobei ein passender Zahn (62) von einer Außenfläche des Körpers der ersten Buchse (60) radial nach außen vorsteht, wobei der Hohlkörper der ersten Buchse (60) einen ersten Abschnitt (64) mit kleinerem Durchmesser und einen zweiten Abschnitt (66) mit größerem Durchmesser aufweist,
eine zweite Buchse (70) mit einem Hohlkörper, der eine entlang der Gelenkachse angeordnete Durchgangsöffnung (75) aufweist, wobei ein passender Zahn (72) von einer Außenfläche des Körpers der zweiten Buchse (70) radial nach außen vorsteht, wobei der Hohlkörper der zweiten Buchse (70) einen ersten Abschnitt (74) mit kleinerem Durchmesser und einen zweiten Abschnitt (76) mit größerem Durchmesser aufweist,
wobei der Schaft (43) des Stifts (40) durch die Durchgangsöffnung (65) der ersten Buchse (60) und durch die Durchgangsöffnung (75) der zweiten Buchse (70) montiert ist,
wobei ein erster Abschnitt (201) des unterteilten oberen Hohlzylinders (200) eine Durchgangsöffnung (260) entlang der Scharnierachse aufweist, wobei die Durchgangsöffnung (260) eine Form und Größe aufweist, die zur Aufnahme des Körpers der ersten Buchse (60) geeignet ist, wobei die Durchgangsöffnung (260) einen Gehäuseabschnitt (262) mit komplementärer Form in Bezug auf den passenden Zahn (62) der ersten Buchse (60) aufweist, wobei die erste Buchse (60) innerhalb der Durchgangsöffnung (260) des ersten Abschnitts (201) des unterteilten oberen Hohlzylinders (200) untergebracht ist, wobei der passende Zahn (62) in dem Gehäuseabschnitt (262) der Durchgangsöffnung (260) des ersten Abschnitts (201) des unterteilten oberen Hohlzylinders (200) untergebracht ist,
wobei ein letzter Abschnitt (207) des unterteilten oberen Hohlzylinders (200) eine Durchgangsöffnung (270) entlang der Scharnierachse aufweist, wobei die Durchgangsöffnung (270) eine Form und Größe aufweist, die zur Aufnahme des Körpers der zweiten Buchse (70) geeignet ist, wobei die Durchgangsöffnung (270) einen Gehäuseabschnitt (272) mit komplementärer Form in Bezug auf den passenden Zahn (72) der zweiten Buchse (70) aufweist, wobei die zweite Buchse (70) innerhalb der Durchgangsöffnung (270) des letzten Abschnitts (207) des unterteilten oberen Hohlzylinders (200) untergebracht ist, wobei der passende Zahn (72) in dem Gehäuseabschnitt (272) der Durchgangsöffnung (270) des letzten Abschnitts (207) des unterteilten oberen Hohlzylinders (200) untergebracht ist.

2. Gehäuse (100) nach Anspruch 1, **dadurch gekennzeichnet, dass** die Durchgangsöffnung (65) der ersten Buchse (60) einen Endabschnitt (642) mit größerem Durchmesser und komplementärer Form zu dem Schraubkopf (42) des Stifts (40) aufweist, wobei der Schraubkopf (42) in dem Endabschnitt (642) der Durchgangsöffnung (65) der ersten Buchse (65) untergebracht ist.

3. Gehäuse (100) nach einem der Ansprüche 1 oder 2, **dadurch gekennzeichnet, dass** der passende Zahn (62) von einer Außenfläche des zweiten Abschnitts (66) des Körpers der ersten Buchse (60) radial nach außen vorsteht.

4. Gehäuse (100) nach einem der Ansprüche 1-3, **dadurch gekennzeichnet, dass** ein erster Abschnitt (301) des unterteilten unteren Hohlzylinders (300) eine Durchgangsöffnung (360) entlang der Scharnierachse aufweist, deren Form und Größe geeignet ist, mindestens einen Teil des Körpers der ersten Buchse (60) aufzunehmen.

5. Gehäuse (100) nach Anspruch 4, **dadurch gekennzeichnet, dass** die Durchgangsöffnung (360) des ersten Abschnitts (301) des unterteilten unteren Hohlzylinders (300) eine Form und Größe aufweist, die geeignet ist, mindestens einen Teil des ersten Abschnitts (64) der ersten Buchse (60) aufzunehmen.

6. Gehäuse (100) nach einem der Ansprüche 1-5, **dadurch gekennzeichnet, dass** die Durchgangsöffnung (75) der zweiten Buchse (70) einen Endabschnitt (750) mit größerem Durchmesser und komplementärer Form zur Mutter (50) aufweist, wobei die Mutter (50) in dem Endabschnitt (750) der Durchgangsöffnung (75) der zweiten Buchse (75) untergebracht ist.

7. Gehäuse (100) nach einem der Ansprüche 1-6, **dadurch gekennzeichnet, dass** der passende Zahn (72) der zweiten Buchse (70) von einer Außenfläche des zweiten Abschnitts (76) des Körpers der zweiten Buchse (70) radial nach außen vorsteht.

8. Gehäuse (100) nach einem der Ansprüche 1-7, **dadurch gekennzeichnet, dass** ein letzter Abschnitt (306) des unterteilten unteren Hohlzylinders (300) eine Durchgangsöffnung (370) entlang der Schwenkachse aufweist, deren Form und Größe geeignet ist, mindestens einen Teil des Körpers der zweiten Buchse (70) aufzunehmen.

9. Gehäuse (100) nach Anspruch 8, **dadurch gekennzeichnet, dass** die Durchgangsöffnung (370) des letzten Abschnitts (306) des unterteilten unteren Hohlzylinders (300) eine Form und Größe aufweist, die geeignet ist, mindestens einen Teil des ersten Abschnitts (74) der zweiten Buchse (70) aufzunehmen.

10. Gehäuse (100) nach einem der Ansprüche 1-9, **dadurch gekennzeichnet, dass** ein zweiter Abschnitt (202) des unterteilten oberen Hohlzylinders (200) eine Durchgangsöffnung (264) entlang der Schwenkachse aufweist, deren Form und Größe geeignet ist, mindestens einen Teil des ersten Abschnitts (64) der ersten Buchse (60) aufzunehmen und dass ein vorletzter Abschnitt (206) des unterteilten oberen Hohlzylinders (200) eine Durchgangsöffnung (274) entlang der Schwenkachse aufweist, deren Form und Größe geeignet ist, mindestens einen Teil des ersten Abschnitts (74) der zweiten Buchse (70) aufzunehmen.

## Revendications

1. Caisson (100) pour cycle ou motocyclette comprenant un couvercle (102), un fond (103) et au moins une charnière pliante (10),
dans lequel ladite charnière de pliage (10) comprend
une partie supérieure (20) engagée avec le couvercle (102) et comprenant un cylindre creux supérieur sectionné (200),
une partie inférieure (30) engagée avec le fond (103) et comprenant un cylindre creux inférieur sectionné (300),
une goupille (40) pivotant avec le cylindre creux supérieur sectionné (200) et avec le cylindre creux inférieur sectionné (300) le long d'un axe d'articulation, **caractérisée en ce que** ladite goupille (40) comprend une tête de vissage (42), une tige (43) comprenant au moins une partie filetée (41), un écrou (50) vissé à ladite au moins une partie filetée (41) de la tige (43) de la goupille (40),
une première douille (60) comprenant un corps creux doté d'une ouverture traversante (65) disposée le long de l'axe d'articulation, une dent correspondante (62) faisant saillie radialement vers l'extérieur à partir d'une surface externe du corps de la première douille (60), dans laquelle le corps creux de la première douille (60) comprend une première partie (64) de plus petit diamètre et une deuxième partie (66) de plus grand diamètre,
une deuxième douille (70) comprenant un corps creux doté d'une ouverture traversante (75) disposée le long de l'axe d'articulation, une dent correspondante (72) faisant saillie radialement vers l'extérieur à partir d'une surface externe du corps de la deuxième douille (70), le corps creux de la deuxième douille (70) comprenant une première partie (74) de plus petit diamètre et une deuxième partie (76) de plus grand diamètre,
dans lequel la tige (43) de la goupille (40) est montée à travers l'ouverture (65) de la première douille (60) et à travers l'ouverture (75) de la seconde douille (70),
dans laquelle une première section (201) du cylindre creux supérieur sectionné (200) comprend une ouverture traversante (260) le long de l'axe d'articulation, dans laquelle ladite ouverture traversante (260) est de forme et de taille appropriées pour loger le corps de la première douille (60), dans laquelle ladite ouverture traversante (260) comprend une partie de logement (262) de forme complémentaire par rapport à la dent correspondante (62) de la première douille (60), dans laquelle ladite première douille (60) est logée à l'intérieur de ladite ouverture traversante (260) de la première section (201) du cylindre creux supérieur sectionné (200), dans laquelle ladite dent correspondante (62) est logée dans ladite partie de logement (262) de ladite ouverture traversante (260) de ladite première section (201) du cylindre creux supérieur sectionné (200),
dans laquelle une dernière section (207) du cylindre creux supérieur sectionné (200) comprend une ouverture traversante (270) le long de l'axe d'articulation, dans laquelle ladite ouverture traversante (270) est de forme et de taille appropriées pour loger le corps de la deuxième douille (70), dans laquelle ladite ouverture traversante (270) comprend une partie de logement (272) de forme complémentaire par rapport à la dent correspondante (72) de la deuxième douille (70), dans laquelle ladite deuxième douille (70) est logée à l'intérieur de ladite ouverture traversante (270) de la dernière section (207) du cylindre creux supérieur sectionné (200), dans laquelle ladite dent correspondante (72) est logée dans ladite partie de logement (272) de ladite ouverture traversante (270) de ladite dernière section (207) du cylindre creux supérieur sectionné (200).

2. Caisson (100) selon la revendication 1, **caractérisé en ce que** ladite ouverture traversante (65) de la première douille (60) comprend une partie terminale (642) de plus grand diamètre et de forme complémentaire à la tête de vissage (42) de la goupille (40), dans laquelle ladite tête de vissage (42) est logée dans ladite partie terminale (642) de l'ouverture traversante (65) de la première douille (65).

3. Caisson (100) selon l'une quelconque des revendications 1 ou 2, **caractérisé en ce que** ladite dent correspondante (62) fait saillie radialement vers l'extérieur à partir d'une surface externe de la deuxième partie (66) du corps de la première douille (60).

4. Caisson (100) selon l'une quelconque des revendications 1-3, **caractérisé en ce qu'**une première section (301) du cylindre creux inférieur sectionné (300) comprend une ouverture traversante (360) le long de l'axe d'articulation de forme et de taille appropriées pour loger au moins une partie du corps de la première douille (60).

5. Caisson (100) selon la revendication 4, **caractérisé en ce que** ladite ouverture traversante (360) de la première section (301) du cylindre creux inférieur sectionné (300) a une forme et une taille appropriées pour loger au moins une partie de la première portion (64) de la première douille (60).

6. Caisson (100) selon l'une des revendications 1-5, **caractérisé en ce que** ladite ouverture traversante (75) de la deuxième douille (70) comprend une partie terminale (750) ayant un diamètre plus grand et une forme complémentaire à l'écrou (50), dans laquelle ledit écrou (50) est logé dans ladite partie terminale (750) de l'ouverture traversante (75) de la deuxième douille (75).

7. Caisson (100) selon l'une des revendications 1-6, **caractérisé par le fait que** la dent correspondante (72) de la deuxième douille (70) fait saillie radialement vers l'extérieur à partir d'une surface externe de la deuxième partie (76) du corps de la deuxième douille (70).

8. Caisson (100) selon l'une quelconque des revendications 1-7, **caractérisé en ce qu'**une dernière section (306) du cylindre creux inférieur sectionné (300) comprend une ouverture traversante (370) le long de l'axe d'articulation dont la forme et la taille conviennent pour loger au moins une partie du corps de la deuxième douille (70).

9. Caisson (100) selon la revendication 8, **caractérisé en ce que** ladite ouverture traversante (370) de la dernière section (306) du cylindre creux inférieur sectionné (300) a une forme et une taille appropriées pour loger au moins une partie de la première portion (74) de la deuxième douille (70).

10. Caisson (100) selon l'une quelconque des revendications 1-9, **caractérisé en ce qu'**une deuxième section (202) du cylindre creux supérieur sectionné (200) comprend une ouverture traversante (264) le long de l'axe d'articulation de forme et de taille appropriées pour loger au moins une partie de la première portion (64) de la première douille (60) et
qu'une avant-dernière section (206) du cylindre creux supérieur sectionné (200) comprend une ouverture traversante (274) le long de l'axe de charnière de forme et de taille appropriées pour loger au moins une partie de la première portion (74) de la deuxième douille (70).
